# EUROPEAN PATENT APPLICATION

(11) **EP 2 168 531 A1**
(43) Date of publication of application: **31.03.2010**
(21) Application number: 09169342.4
(22) Date of filing: 03.09.2009
(51) Int. Cl.: A61C 8/00

(54) **Implant superstructure**

(30) Priority: 25.09.2008 NL 2002019
(71) Applicant: Biocomp Industries B.V., 5265 ED Vught (NL)
(72) Inventor: Wils, Ronald Peter Joannes, 5262 BE Vught (NL)
(74) Representative: Swinkels, Bart Willem

(57) **Abstract**

Implant structure consisting of an implant and an attachment. The attachment is provided with a first coupling part for connection to the implant and provided with a second coupling part for connection to a prosthesis. Said second coupling part may comprise a ball, cone, polygon or cylinder or the like. It is proposed, according to the invention, to construct the attachment from two connectable attachment parts. In this manner, it is possible to achieve an angled attachment which ensures good accessibility to the connecting screw of the first coupling part without special openings having to be provided in the attachment. In addition, the angle between the two attachment parts can readily be changed to suit requirements by varying only one of the attachment parts. After fitting, a structure with a smooth wall is produced.

## Description

The present invention relates to an attachment for an implant according to the preamble of Claim 1.

Such a structure is known from US 5,069,622. Therein, the attachment is connected, on the one hand, to an implant which has been introduced earlier and, on the other hand, to a cover to which, for example, a connecting rod can be attached which, on the other side, is connected to a further similar structure and in which a prosthesis can be fitted on the connecting rod. A cover is used which extends over a significant distance around an opening which has been made in the attachment in order to reach the first coupling part of the implant, being a screw. Such openings result, in particular, with angled attachments. Angled attachments are used in those cases where either the implant has to be introduced into the jaw at an angle, for example in order to avoid nerves or to reach parts where the jawbone is expected to be stronger. On the other hand, under certain circumstances it may be necessary to position the second coupling part at an angle. However, the attachment does in any case have to be connected to the implant and until now the only way to achieve this was by providing a lateral opening in the angled attachment which would subsequently be covered by a cover or the like.

WO 97/01306 shows a single-part attachment and a cover placed thereover which is provided with a bore through which a screw can be introduced which engages with a screw thread provided in the attachment part. Due to the structure, the cover cannot be of rotationally symmetrical design and can only be placed on the attachment part in one position.

EP-A-0583829 shows an attachment comprising two parts which are permanently connected to one another by gluing.

It is an object of the present invention to improve the prior art structures and to provide a simpler structure which no longer requires the fitting of covers and other structures.

This object is achieved with an above-described attachment having the features of Claim 1.

According to the invention, the two attachment parts making up the attachment are kept apart during fitting. That is to say that when the second attachment part is omitted, the first attachment part is attached to the implant. As the second attachment part is absent, an attachment means, such as a screw, is readily accessible from the outside in the first attachment part. Due to the fact that the second attachment part will be provided later, there are no limits with regard to the size of the access opening, since the second attachment part will completely cover the access opening for the attachment means, such as a screw, on the implant after the first attachment part has been fitted correctly. The coupling part which is present on the second attachment part for connection with, for example, a bridge no longer has to be embodied such that it is able to accommodate or is accessible to an attachment means, such as a screw.

According to the present invention, the respective connecting parts form part of the respective attachment part. That is to say, no separate individual components such as screws and the like are used to connect the attachment parts to one another.

In addition, the present invention makes it possible for the second attachment part to be a universal prt, that is to say identical, while the first attachment part is selected depending on the desired angle. As a result thereof, the attachment parts can be produced more efficiently and the cost price can be reduced. The second attachment part may be provided with the second coupling part in a manner which is customary in the prior art. This second coupling part may comprise a sphere or ball or a polygon or circle, cone or similar structure, if desired provided with an internal screw thread.

Using the present invention, an attachment is produced which, once the two attachment parts have been fitted, has external walls which are smooth on all sides.

The mechanical connection may comprise a threaded connection, snap connection or bayonet connection which can be released without causing damage.

The present invention is particularly suitable for angled attachments having a slightly larger angle, that is to say an angle of more than 15 degrees. This is due to the fact that when the angle increases, the opening required to give access to the attachment means of the attachment part with the implant will increase steadily and become less acceptable.

The connection between the first attachment and the second attachment can be of any conceivable design. By way of example, the use of screw thread is mentioned here. Snap and plug-and-socket or bayonet connections can also be used and consideration may also be given to combined attachment from the second coupling part in the direction of the first attachment. The second coupling part may, for example, be provided with a screw thread which provides the connection to the first attachment part.

Preferably, the attachment parts are each provided with an outer circumferential edge. Due to the presence of a hole for receiving, for example, the fixing bolt on the implant, such an outer circumferential edge can be produced. More in particular, according to the present invention these mechanical connecting parts are provided at the outer circumferential edge. In the case of a screw connection, this means that the screw thread is provided in the outer circumferential edge. The attachment parts are in this case preferably such that when they are screwed together, this results in a structure which is smooth on the outside. This means that in this case one of the attachment parts is provided with a projecting (male) part which fits into the receiving (female) part of the other attachment pat. The receiving part is provided with an internal screw thread and the projecting part with an external screw thread.

In addition, according to an advantageous embodiment, the second coupling part is of rotationally symmetrical design. That is to say that when the second coupling part is fastened to the first coupling part, the end position thereof is not relevant for a cover which is to be fitted subsequently and to which, for example, a crown or a support for a bridge part is attached. This applies in particular to the embodiment in which the angle is provided in the first coupling part.

According to a particular embodiment of the invention, both the first coupling part and the second coupling part may be provided with a rotation-inhibiting part. With regard to the first coupling part, this means that the position of the attachment part to which it is connected can be fixed in (a number of) discrete positions with respect to the implant. With respect to the second coupling part, this is important for the subsequent fitting of a superstructure. These measures can be applied independently of one another.

The present invention also relates to a combination of two spaced-apart implant structures in which the above-described attachment is used in at least one of these implant structures. In this case, a rod can be fitted between the two implant structures on which a prosthesis can be mounted.

The present invention also relates to a method for constructing an implant structure, comprising providing an implant, an attachment as described above and a prosthesis, in which the first attachment part is fitted on said implant and connected thereto, the second attachment is subsequently connected to the first attachment part, following which the prosthesis is fitted to the second attachment part.

The invention will be described in more detail below with reference to an exemplary embodiment illustrated in the drawing, in which:
Fig. 1 highly diagrammatically shows a perspective view of a jaw provided with implants;
Fig. 2 shows a detail of an implant structure illustrated in Fig. 1;
Fig. 3a-d show the various steps for producing a part of the implant structure and
Fig. 4a, b show a variant of the second coupling part.

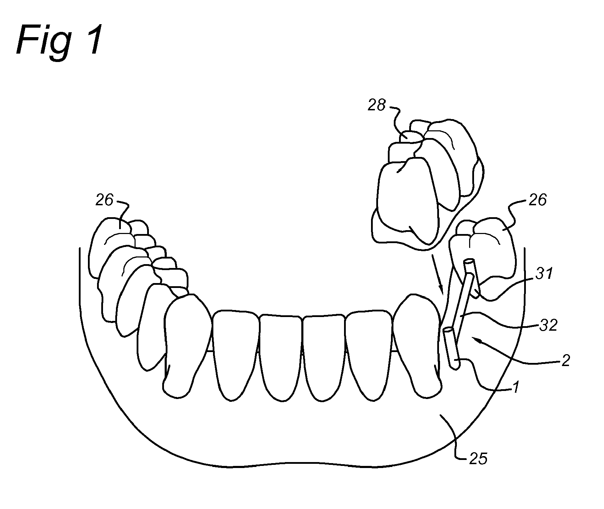

Fig. 1 diagrammatically shows a jaw 25 which is provided with dental elements 26. Two implant structures 1 and 31 are present, between which a rod 32 is connected and to which a prosthesis 28 can be fitted in a manner which is known per se, as is indicated by the arrow.

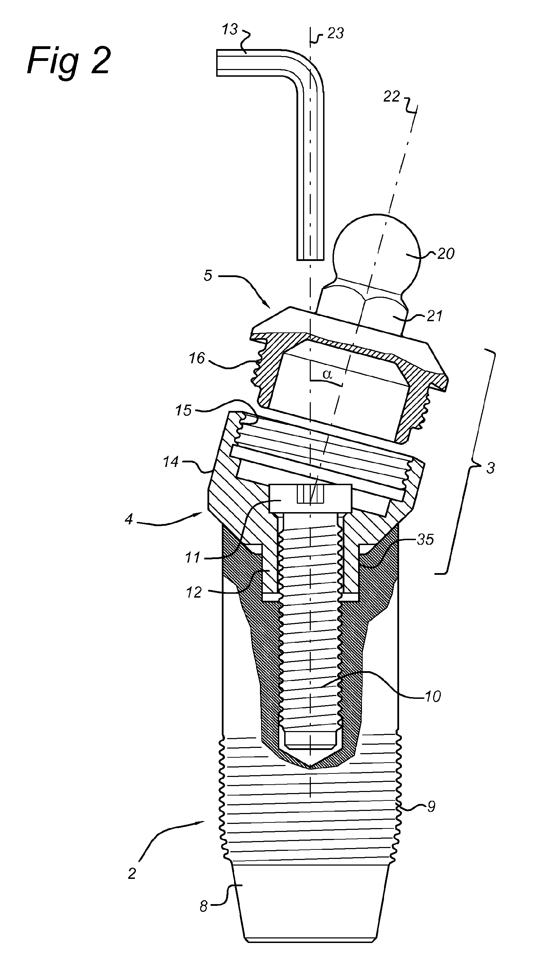

The present invention relates in particular to the implant structure 1. As can be seen in Fig. 1, this consists of an implant fitted in the jaw. For the rest, reference is made to Fig. 2 and further.

Fig. 2 shows details of the implant 2. This consists of a cylindrical part 9, a smooth part 8 situated in front thereof and a threaded recess 10. However, it is to be understood that the implant 2 can be any implant known in the prior art. This means that the external screw thread part 9 may be of tapering design, may consist of various screw thread parts and smooth parts may be located in between. In addition, part 8 may be arranged in a different position.

An attachment which is denoted overall by reference numeral 3 is to be fitted on the implant 2. This attachment 3 has a first coupling part which is formed by collar 12 which is adapted to cooperate with the upper end of the implant 2. Thus, it is possible to design collar 12 as a hexagon and to provide the implant with a corresponding hexagonal hole 35. Thus, the attachment 3 can only be fitted in a number of predetermined discrete positions with respect to the implant 2. The embodiment of these various parts is not relevant to the invention. In general, a connecting screw 11 will be used to connect the attachment 3 to the screw thread 10 of the implant 2. This connecting screw 11 can be fixed in any suitable way, as will be described below in more detail. The attachment 3 is also provided with a second coupling part which, in this example, is embodied as a sphere or ball 20 onto which the prosthesis illustrated in Fig. 1 can be click-fitted. Other coupling parts are also conceivable, as will be explained below.

Fig. 2 shows a tool 13 which is to drive screw 11 and is to be moved towards screw 11 along centre line 23.

In the prior art, an opening is provided in the wall of the attachment in order to make it possible to drive the screw, which opening is subsequently covered.

The present invention now proposes to construct the attachment 3 from a first attachment part 4 and a second attachment part 5. In this example, these can be connected to one another via an internal screw thread in attachment part 4 and external screw thread in attachment part 5. These are denoted by reference numerals 15 and 16, respectively. The relevant parts are embodied such that after the attachment parts 4 and 5 have been connected to one another, a smooth transition is created between the two attachment parts. In order to rotationally drive the attachment part 5, a hexagon 21 may for example be used.

As can be seen in the drawing, the first attachment part 4 is of an angled design with this particular embodiment of the invention. That is to say that the end face thereof, the perpendicular of which is denoted by 22, is at an angle to the centre line 23. This angle is denoted by α. Although the implant 2 has been drawn as being vertical, the implant 2 will generally be fitted at an angle and the angled attachment is required in order to be able to fit the coupling part 20 substantially vertically, as is illustrated in Fig. 1.

By combining differently angled first attachment parts 4 with a constantly fixed second attachment part 5 according to the invention, it is readily possible to compensate for a large number of different angles at which the implant 2 is introduced, so that the second coupling part 20 is always situated in the correct position.

By arranging the first attachment part 4 in a certain position and at a certain angle with respect to the implant, the position of the attachment part 4 and the implant can be fixed by the structure which is of hexagonal or of a different embodiment. As the angle in this particular embodiment is formed in the attachment part 4, the attachment part 5 can be relatively simple. In the present case, it is rotationally symmetrical (sphere 20) so that, one the attachment part 4 has been correctly selected and positioned once using a "universal" attachment part 5, further coupling to the dental element or other superstructure can be achieved. This means that the attachment parts 4 are selected such that any desired angle in the jaw cavity can be achieved while the attachment parts 5 are selected such that any desired connection to a further superstructure can be achieved.

Of course, it is likewise possible to produce the connection between the first attachment part and the second attachment part by means of a bolt or the like which acts from the coupling part 20 in the interior of the first attachment part. Combinations with the screw thread 15, 16 are also possible.

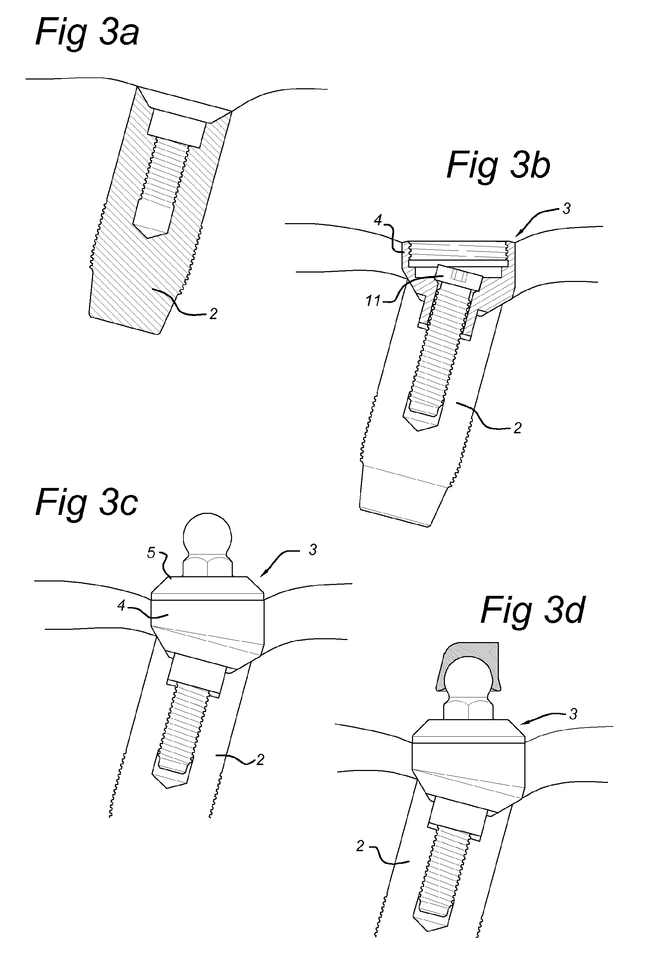

Figs. 3a-d show the construction of an implant structure step by step.

The basis is formed by an implant 2 which is fitted in the jaw of a patient in the usual manner. When all the requirements have been met, the first attachment part 4 of the attachment 3 is affixed using the above-described screw 11 (Fig. 3b). In this case, the attachment part 4 is selected which is exactly the right size so that the end face thereof ends up in the correct position in the jaw by the connection to the attachment part 5. Thereafter, the attachment part 5 is fitted, as is shown in Fig. 3c, to which the prosthesis 28 is fitted, for example via a snap or screw connection, either directly or via connecting rod 32 (Fig. 3d).

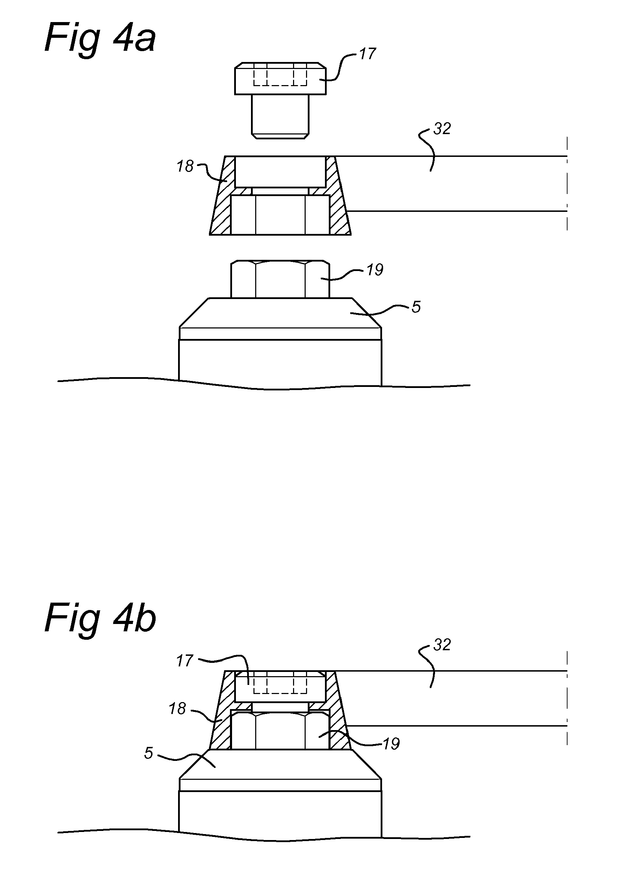

Fig. 4a shows a variant of the second attachment part 5, in which a sphere or polygon 19 with an internal opening is provided instead of the sphere which was shown before. Fig. 4b shows that a connecting cover attached to for example rod 32 from Fig. 1 can be fitted thereon and be connected to part 19 by tightening screw 17. Other variants are likewise possible.

## Claims

1. Attachment (3) for an implant (2) comprising a first coupling part (12)for connection to an implant and a second coupling part (19, 20) for connection to a cover for a superstructure, in which said first and second coupling parts are at an angle (α) of 5-45° with respect to one another, with the attachment (3) comprising a first attachment part (4) with the first coupling part (12) and a second attachment part (5) with the second coupling part (19, 20), which attachment parts (4, 5) can be attached to one another via a mechanical connection (15, 16), and with the first attachment part (4) being provided with a recess for receiving an attachment means (11) for connection to the implant (2), **characterized in that** said mechanical connection comprises connecting parts (15, 16) which are provided on each of the attachment parts (4, 5) and can be connected to one another and released without causing damage.

2. Attachment according to Claim 1, wherein, when the first and second attachment parts are connected to one another, the attachment comprises a smooth uninterrupted side wall.

3. Attachment according to Claim 1 or 2, wherein said mechanical connection comprises a screw, snap or bayonet connection.

4. Attachment according to one of the preceding claims, wherein each of said attachment parts (4, 5) comprises an outer circumferential edge, and in which said mechanical connecting parts (15, 16) are provided in said outer circumferential edge.

5. Attachment according to one of the preceding claims, wherein the end face of the second attachment part (5) which comes to bear against the end face of the first attachment part (4) is substantially at right angles to the longitudinal axis (22) of the second attachment part.

6. Attachment according to one of the preceding claims, wherein the first attachment part (4) is provided with an internal screw thread and the second attachment part (5) with a mating external screw thread (16).

7. Attachment according to one of the preceding claims, wherein the connection between the first attachment part (4) and second attachment part (5) is smooth.

8. Attachment according to one of the preceding claims, wherein the angle (α) between the first attachment part and the second attachment part is between 5-50°.

9. Attachment according to one of the preceding claims, wherein the coupling part comprises a rotation-inhibiting part (19, 35).

10. Attachment according to one of the preceding claims, wherein the second coupling part comprises a ball part, cone part, circular or elliptical part.

11. Attachment according to one of the preceding claims, wherein the angle (α) is produced substantially in the first attachment part.

12. Combination of two spaced-apart implant structures (1, 31), wherein one of said implant structures comprises an attachment (3) according to one of the preceding claims

13. Combination according to Claim 12, wherein a connecting rod or bridge structure (32) is provided between the second coupling parts of said implant structures.

14. Assembly comprising a combination according to claims 11 and 12 and a prosthesis (28) fitted thereto.

15. Method for constructing an implant structure, comprising an implant, an attachment according to one of Claims 1-10 and a prosthesis, wherein the first attachment part is fitted on said implant and connected thereto, the second attachment part is subsequently connected to the first attachment part, following which the prosthesis is fitted to the second attachment part.
